Europäisches Patentamt

European Patent Office

Office européen des brevets

(19)

(11) Numéro de publication : **0 192 579
B1**

(12)                    **FASCICULE DE BREVET EUROPÉEN**

(45) Date de publication du fascicule du brevet :
07.09.88

(51) Int. Cl.⁴ : **B 64 D   7/08**

(21) Numéro de dépôt : 86400376.9

(22) Date de dépôt : 21.02.86

(54) **Lance-missile à patin d'éjection.**

(30) Priorité : 22.02.85 FR 8502612

(43) Date de publication de la demande :
27.08.86 Bulletin 86/35

(45) Mention de la délivrance du brevet :
07.09.88 Bulletin 88/36

(84) Etats contractants désignés :
DE GB IT SE

(56) Documents cités :
FR-A- 2 213 194
GB-A- 1 556 386
GB-A- 2 078 912
US-A- 3 008 376
US-A- 3 273 459

(73) Titulaire : **MATRA
4 rue de Presbourg
F-75116 Paris (FR)**

(72) Inventeur : **Mace, Guy
6 square Debussy
F-78150 Le Chesnay (FR)**
Inventeur : **Anglard, André
17 rue de la Gommerie
F-78120 Rambouillet (FR)**
Inventeur : **Insa, André
125 Boulevard Descartes
F-78180 Montigny Le Bretonneux (FR)**

(74) Mandataire : **Fort, Jacques et al
CABINET PLASSERAUD 84, rue d'Amsterdam
F-75009 Paris (FR)**

EP 0 192 579 B1

Jouve, 18, rue St-Denis, 75001 Paris, France

## Description

L'invention a pour objet un lance-missile destiné à être monté sur un aéronef militaire, du type comportant des moyens permettant d'écarter le missile de l'aéronef avant allumage du propulseur de ce dernier, moyens exerçant, sur le missile, une force tendant à le chasser à distance de l'aéronef en correspondance avec les caractéristiques du préambule de la revendication 1. Un lance-missile de ce type est connu par exemple du US-A-3 273 459.

On connaît également des lance-missiles du type comportant deux vérins dont les pistons exercent sur le missile des efforts qui l'écartent de l'aéronef lorsque les vérins sont alimentés par une source de fluide moteur qui peut être un liquide ou, plus fréquemment, des gaz de poudre (brevet FR-A-2 498 747).

En utilisant un lance-missile de ce type et en allumant la charge propulsive une fois le missile écarté de l'aéronef, il est possible d'encastrer partiellement les missiles dans le fuselage, ce qui réduit la traînée aérodynamique, et/ou de monter plusieurs missiles en tandem sous le fuselage. Mais les solutions connues présentent un défaut qui devient très grave si l'allumage de la charge propulsive n'intervient qu'un temps notable après l'éjection : il suffit d'un écart de l'ordre du centième entre les forces exercées par les vérins pour imprimer au missile une vitesse angulaire en tangage appréciable. Or, il est extrêmement difficile d'équilibrer avec un tel degré de précision les forces exercées par les vérins. En conséquence, l'attitude du missile lors de l'allumage de la charge propulsive ne peut pas être prédite avec précision.

L'invention vise notamment à fournir un lance-missile à éjection répondant mieux que ceux antérieurement connus aux exigences de la pratique, notamment en ce qu'il permet d'imprimer au missile une vitesse angulaire de basculement bien déterminée pour tout le domaine d'éjection, ce qui permet de retarder la mise en œuvre de l'allumage du propulseur et l'intervention des moyens de pilotage. Elle vise également à assurer une grande sécurité de fonctionnement en interdisant mécaniquement l'éjection du missile aussi longtemps qu'une opération préalable de déverrouillage n'a pas eu lieu et d'assurer une tolérance notable en ce qui concerne l'emplacement du centre de gravité du missile.

Dans ce but, l'invention propose notamment un lance-missile du type ci-dessus défini comportant, sur la structure support, des moyens désarmables d'accrochage du missile, le patin prenant appui sur le missile et ayant une longueur suffisante pour fixer non seulement la distance entre le missile et l'aéronef, mais aussi l'orientation angulaire du missile, les moyens à pression de fluide étant reliés aux moyens d'accrochage pour les désarmer avant déploiement des biellettes. Grâce à cette disposition, il est possible de fixer de façon précise la position et la vitesse angulaire du missile lorsqu'il échappe à la poussée du patin. La vitesse angulaire est en particulier nulle lorsque les biellettes constituent un parallélogramme déformable. On peut par contre, en utilisant une forme différente d'un parallélogramme, provoquer une rotation du patin au cours de son déplacement, donc régler la vitesse angulaire d'éjection du missile en tangage. En particulier, il est possible de donner au missile une orientation en piqué (ou en cabré) et une vitesse de tangage pour écarter le missile de l'aéronef rapidement et pour tenir compte des conditions dans lesquelles s'effectue généralement le tir.

Le patin, qui sera avantageusement prévu pour épouser la forme de la peau du missile, devra en règle générale avoir une longueur représentant au moins 1/6e de la longueur du missile et être placé de façon à exercer son action sur le missile dans la zone du centre de gravité de ce dernier. Cependant, le lance-missile suivant l'invention tolère des variations appréciables en ce qui concerne les dimensions, la masse et la position du centre de gravité.

Les moyens d'accrochage du missile comportent avantageusement un rail en une ou plusieurs pièces, sur lequel peuvent coulisser une ou des ferrures du missile de façon à engager ce dernier de l'arrière vers l'avant jusqu'à ce qu'il soit immobilisé par un crochet de verrouillage longitudinal, déplaçable par un vérin de façon à entraîner le missile vers l'avant et à dégager les ferrures du rail. Dans un premier mode de réalisation, le vérin de déverrouillage comprend un équipage mobile qui, dans une première partie de sa trajectoire à partir de la position de repos, provoque le décrochage du missile et, dans une seconde phase, provoque l'éjection par mise en action du patin. Dans un autre mode de réalisation, les moyens à pression de fluide comprennent un premier vérin destiné à effectuer le déverrouillage et un second vérin qui commande le déplacement du patin, les deux vérins étant associés par des moyens de transfert de fluide conçus de façon que le second vérin ne puisse être mis en action que lorsque le premier a effectué le décrochage.

L'invention sera mieux comprise à la lecture de la description qui suit de modes particulier d'exécution donnés à titre d'exemples non limitatifs. La description se réfère aux dessins qui l'accompagnent, dans lesquels :

— les Figures 1A et 1B sont des schémas de principe, en élévation, des parties avant et arrière d'un lance-missile constituant un premier mode de réalisation,

— les Figures 2 et 3 sont des vues en coupe suivant les lignes II-II et III-III de la Figure 1.

— la Figure 4, similaire à la Figure 1, montre un second mode de réalisation.

— les Figures 5 et 6 sont des vues à grande échelle des vérins du dispositif de la Figure 4.

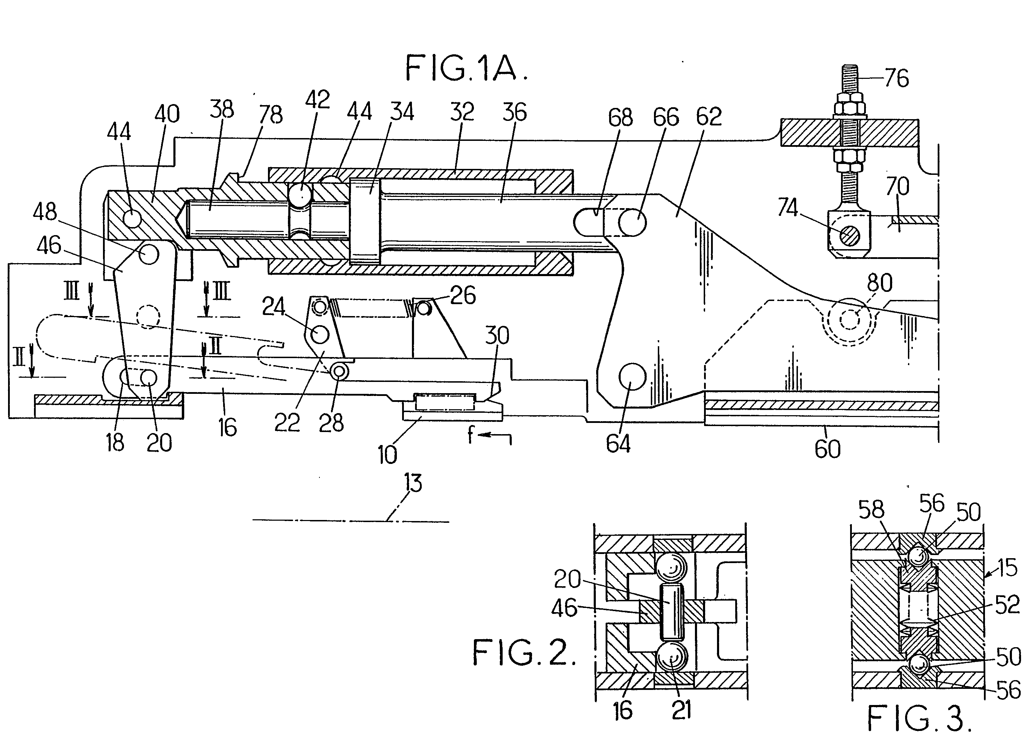

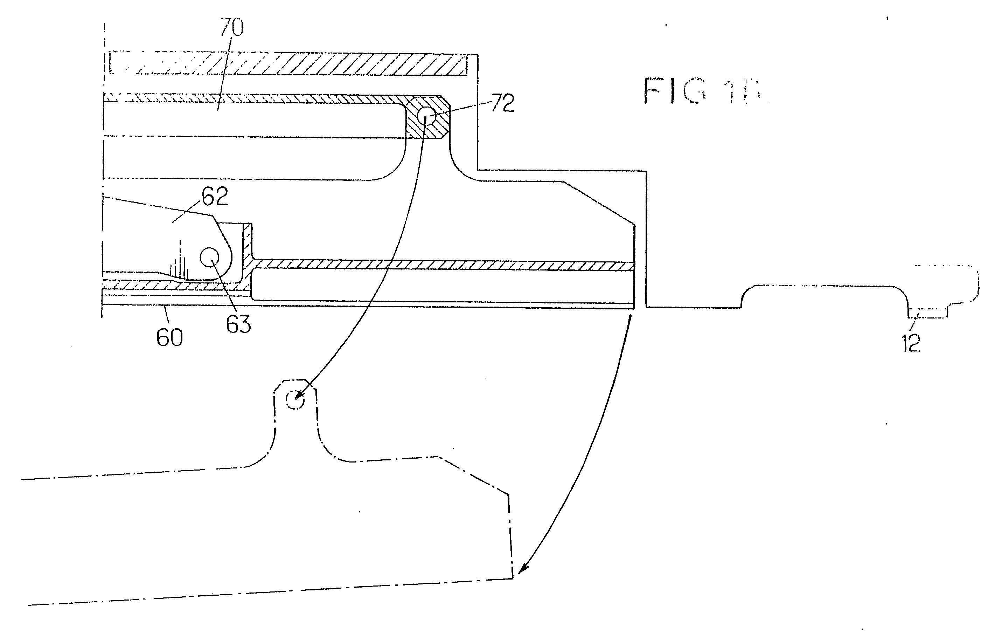

Le lance-missile dont le schéma est donné en Figure 1 comporte une structure support dont une fraction seulement est représentée, prévue pour être fixée à l'ossature de l'aéronef d'emport. Cette structure support comprend un rail d'accrochage en deux tronçons 10 et 12 destinés à recevoir les ferrures avant et arrière du missile, dont seul l'axe 13 est représenté dans la position qu'il occupe lors du transport. Ces ferrures sont prévues pour être engagées dans les tronçons de rail 10 et 12 depuis l'arrière, c'est-à-dire dans le sens indiqué par la flèche f.

Les moyens désarmables d'accrochage du missile sur la structure comportent un crochet 16 de verrouillage longitudinal susceptible de se déplacer dans la structure support entre la position de verrouillage où il est montré en traits pleins sur la Figure 1 et une position de libération du missile où il est montré en tirets. Un trou allongé 18 ménagé dans la partie avant du levier emprisonne un axe 20 d'articulation et d'entraînement. L'autre extrémité du crochet 16 est repoussée vers le bas par un guignol 22 qui tourne sur la structure autour d'un axe 24 et est muni d'un ressort de rappel 26. Lorsque le guignol 22 et le crochet 16 sont en position de repos, un galet terminal 28 du guignol s'engage dans une encoche du levier. Le crochet se termine par un verrou comportant une rampe d'accès 30 inclinée, de façon que le crochet se soulève en tournant autour de l'axe 20, contre l'effort du ressort 26, lorsqu'on introduit le missile, avant de retomber et d'emprisonner la ferrure avant du missile.

Pour permettre l'extraction du missile, le guignol 22 peut être muni d'un levier extérieur permettant de le basculer contre l'action du ressort 26 et de soulever le crochet 16 pour dégager le levier d'appui 14 et libérer le missile qui peut alors être retiré vers l'arrière.

Le mode de réalisation de l'invention montré en Figure 1 comprend des moyens à pression de fluide constitués par un seul vérin placé à peu près parallèlement à l'axe du missile, destinés à assurer en succession :

— dans un premier temps, le déverrouillage du crochet 16,

— dans un second temps, la libération du missile par traction de la ferrure avant du missile vers l'avant à l'aide du crochet 16,

— dans un troisième temps, la mise en action d'un patin d'éjection.

L'utilisation d'un vérin unique donne au système une grande sécurité de fonctionnement, l'éjection ne pouvant intervrnir qu'après libération du missile. Comme on le verra plus loin, le vérin peut être prévu de façon à exercer un effort beaucoup plus faible au cours des deux premières phases qu'au cours de la troisième.

Le vérin comporte un cylindre 32 articulé sur la structure support, dans lequel est déplaçable un équipage mobile composite.

Cet équipage comprend un piston 34 solidaire d'une tige arrière 36, reliée à la tringlerie de mise en action du patin d'éjection et une tige avant 38. Cette tige est montée de façon à pouvoir coulisser dans une douille 40. Un système de verrouillage temporaire de la tige 38 et de la douille 40 comprend des rouleaux ou des billes 42 logées dans des couloirs radiaux de la douille 40 et qui, lorsqu'elles sont maintenues en saillie vers l'intérieur par la paroi du cylindre 32, s'engagent dans une gorge de la tige 38 et l'immobilisent par rapport à la douille. Une rainure 44 ménagée dans la paroi du cylindre permet aux billes de s'échapper et de libérer la tige 38 lorsque l'équipage mobile a parcouru une distance déterminée depuis la position de repos où il est montré en Figure 1.

La douille 40 est reliée par un pivot 44 à un levier 46 tournant autour d'un axe 48 porté par la structure support. L'extrémité du levier opposée à celle qui est articulée sur la douille 40 porte l'axe 20 d'articulation du crochet 16. Un dispositif de verrouillage élastique du levier 46 est prévu pour immobiliser ce levier aussi longtemps qu'il n'est pas soumis à une force dépassant un seuil déterminé. Le mécanisme de verrouillage élastique peut avoir la constitution montrée en Figure 3 et comporter des billes 50 qu'un empilement de rondelles élastiques 52 logé dans le levier tend à repousser sur des sièges de verrouillage 56 par l'intermédiaire de poussoirs 58.

La tige 36 du vérin est reliée à une tringlerie de mise en action du patin d'éjection 60. Ce patin présentera à sa partie inférieure une forme de gouttière adaptée à la forme de la peau du missile. La tringlerie comprend une biellette principale 62, destinée à transmettre l'effort moteur au patin 60, qui tourne sur un axe 64 porté par la structure support. La liaison entre la tige 36 et la biellette 62 est constituée par un axe 66 fixé à la biellette 62 et emprisonné dans un trou allongé 68 de la tige 36. Une biellette secondaire 70 est articulée, d'une part par un axe 72 sur le patin 60, d'autre part, par un axe 74 sur la structure support. La position de l'articulation 74 est avantageusement réglable, par exemple à l'aide d'une tige filetée 76 et d'écrous de blocage, pour qu'il soit permis d'ajuster l'assiette prise par le patin lors de la course du piston 34. Le quadrilatère constitué par les axes 63, 64, 72 et 74 sera toujours très proche d'un parallélogramme, les vitesses de tangage à imprimer au missile étant toujours faibles.

On voit par ailleurs immédiatement que l'orientation angulaire imposée au missile lorsque le patin 60 atteint la fin de sa course (indiquée en traits mixtes sur la Figure 1) ne dépend que de la géométrie de la tringlerie.

Le fonctionnement du dispositif lors de la mise en action du piston 34 peut être considéré comme comportant trois phases successives qui seront successivement décrites, ces phases se déroulant en séquence dès que l'on admet du gaz sous pression dans l'intervalle compris entre le piston 34 et un épaulement du cylindre du vérin contre lequel le piston est en appui au repos (Figure 1). La source de fluide sous pression est avantageusement constituée par une bouteille de gaz sous pression, séparée du vérin par un opercule fracturé par percussion lors de la mise en action. Une électrovanne de commande peut être interposée entre la bouteille de gaz sous pression et le vérin.

## Phase 1 : Déverrouillage

La pression du gaz ne s'applique initialement que sur une surface effective d'action faible, correspondant à la différence entre la section du piston 34 et celle de la douille de déverrouillage 40. Le piston 34 se déplace, vers la droite sur la Figure 1, en entraînant la douille 40 et le levier 46. Le déplacement ne commence que lorsque l'effort exercé sur le levier 46 est suffisant pour surmonter la force de précontrainte exercée par les rondelles élastiques 52 et refouler les plongeurs 58. Dès que le levier commence à tourner, il entraîne l'axe 20 qui retient deux billes 21 de verrouillage du crochet 16. La longueur du trou allongé 18 doit évidemment être suffisante pour autoriser ce déverrouillage avant qu'il n'y ait venue en butée de l'axe 20 et entraînement du crochet 16.

On voit que la présence du système de verrouillage par les billes 21 interdit l'avancée du missile en dehors des conditions d'éjection et interdit notamment un échappement intempestif du fait d'une poussée accidentelle du patin d'éjection 60.

## Phase 2 : Décrochage du missile

Une fois l'axe 20 en butée contre le fond du trou 18, le levier 46 entraîne vers l'avant le crochet 16. Ce crochet avance le missile en faisant glisser ses ferrures dans le rail de suspension. Cette opération provoque l'effacement de la prise ombilicale (non représentée, généralement montée sur un système à parallélogramme déformable pour s'escamoter lorsque le missile avance) et l'activation du propulseur, de l'autodirecteur et/ou le déploiement des gouvernes. Sur la douille 40 est prévu un épaulement 78 destiné à venir en butée contre le cylindre 32 lorsque la douille a parcouru une course suffisante pour dégager les ferrures du missile. Pour cette même course, les billes 42 viennent se placer en face de la rainure 44 du corps de vérin. Le crochet 16 est alors dans la position montrée en traits mixtes sur la Figure 1.

## Phase 3 : Ejection

Au cours de la dernière phase, le piston 34 poussé par les gaz poursuit seul sa course. La surface d'action effective de la pression est alors égale à la totalité de la surface du piston. Le trou allongé 68 est prévu de façon qu'il n'y ait pas entraînement de la tringlerie par le piston pendant les phases 1 et 2. Au cours de la troisième phase, la tige 36 commence à entraîner la biellette 62 et déploie le patin 60. On voit que ce déploiement ne peut intervenir qu'une fois le déverrouillage et la libération du missile intervenus. La course du piston se poursuit jusqu'à ce que le patin 60 soit arrivé à l'extrémité de sa course. Des moyens de réglage de débit, tels que des cols soniques, peuvent être prévus sur la tubulure d'arrivée de gaz au vérin, de façon à ajuster la vitesse de déplacement du patin et donc la vitesse de tangage imprimée au missile.

Le dispositif peut être complété par un système de blocage à bille 80, qui peut être similaire à celui montré en Figure 3 et qu'il n'est donc pas nécessaire de décrire de nouveau. Ce système de blocage permet d'éviter tout mouvement intempestif du patin avant éjection. On voit que le dispositif permet de régler avec précision la vitesse de tangage imposée au missile et cela pour tout le domaine d'éjection, ce qui permet de retarder l'allumage du propulseur et le pilotage ; l'encombrement du dispositif est réduit. Sa sécurité de fonctionnement est quasi absolue. Le montage et le démontage du missile sont faciles. Enfin, dans la mesure où on utilise une bouteille de gaz comprimé (azote par exemple) plutôt qu'une cartouche pour fournir les gaz, le système reste propre et la maintenance est réduite, puisqu'elle se limite au remplacement d'une cartouche ou d'une bouteille de gaz.

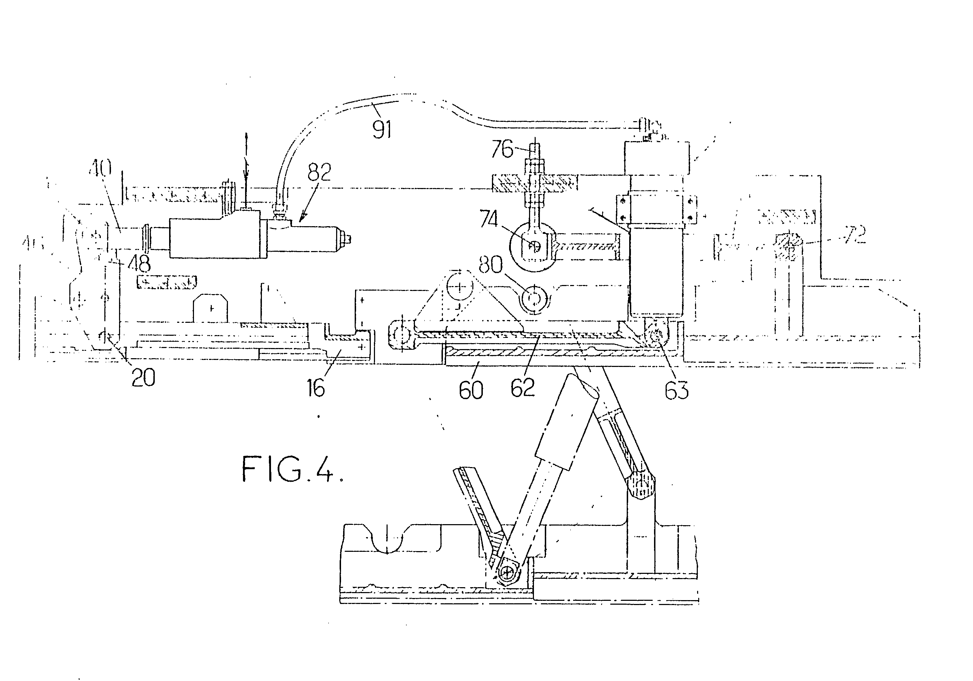

Le mode de réalisation de l'invention montré en Figure 4 se différencie du précédent essentiellement par le fait qu'il utilise un vérin de déverrouillage et un vérin d'éjection distinct, ce dernier pouvant être monté transversalement au sens de déplacement du patin. Pour plus de simplicité, les organes du dispositif de la Figure 4 qui correspondent à ceux déjà décrits sont désignés par le même numéro de référence et ne seront pas évoqués de nouveau.

Le vérin unique du dispositif de la Figure 1 est remplacé, sur la Figure 3, par un vérin 82 de déverrouillage du missile et de libération de ce dernier et un vérin principal d'éjection 84, placé verticalement. La sécurité est cette fois assurée, non plus par des moyens mécaniques, mais par des moyens pneumatiques interdisant l'alimentation du vérin 84 jusqu'à la fin de la mise en action du vérin de déverrouillage 82.

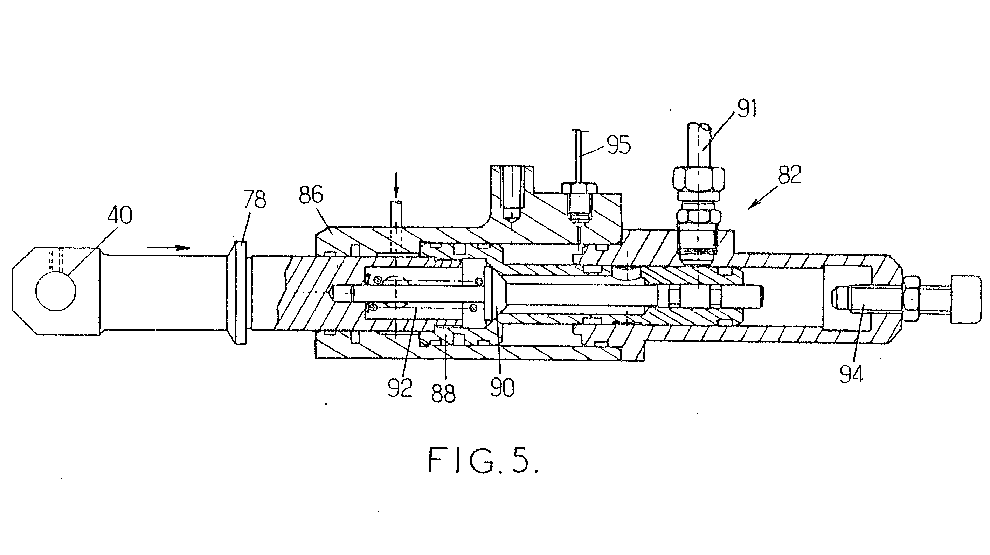

Ce vérin 82, représenté en détail sur la Figure 5, comporte un cylindre 86 dans lequel coulisse un piston 88 creux, contenant une soupape 90 repoussée sur son siège par un ressort de rappel 92. Cette soupape sépare un espace d'admission qui communique avec l'arrivée de gaz dans le cylindre et un espace annulaire qui, lorsque le piston s'est déplacé d'une longueur déterminée à partir de sa position de repos, communique, par un trou ménagé dans le piston, avec une conduite d'alimentation du vérin 84. La soupape 90 est munie d'une tige qui fait saillie du piston vers la droite.

Le mode de fonctionnement du vérin au cours des deux premières phases de la mise en action apparaît immédiatement : la pression du gaz s'exerçant sur la surface effective d'action de faible valeur du piston 88 déplace ce piston vers la droite et provoque successivement le déverrouillage du missile et sa libération par traction vers l'avant. A la fin de ces deux premières phases, la tige de la soupape 90 vient en contact avec une butée réglable 94. La soupape 90 s'ouvre en comprimant le ressort 92. Le gaz à haute pression est alors admis dans la canalisation 91 d'alimentation du vérin d'éjection. Une amenée de gaz sous pression 95 permet de réarmer le piston après éjection.

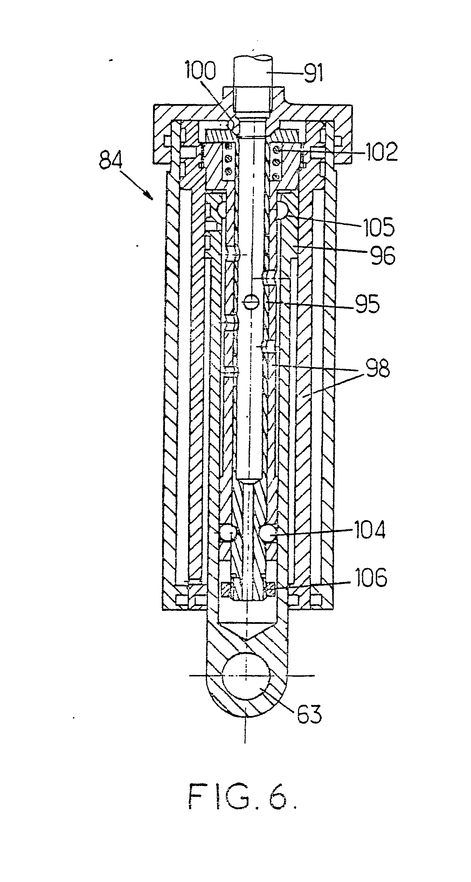

Le vérin d'éjection 84 montré à titre d'exemple sur la Figure 6 est du type télescopique à deux étages, dont l'ordre de sortie est imposé mécaniquement de manière à régler l'effort d'éjection. Il comporte un tube central percé d'orifices latéralement et en bout, pour permettre au gaz de le traverser. Sur cette tige coulissent un piston central 96 présentant une faible surface d'action, placé à l'intérieur d'un fourreau 98. Le fonctionnement est le suivant : lorsque le gaz provenant de la tubulure 91 pénètre dans le tube central 95, il exerce un effort de propulsion sur toute la section du piston 96. Le fourreau 98 est alors maintenu en position haute par la contre-pression qui s'exerce sur lui. Une soupape conique constituée par l'embout terminal de la tubulure 91 et une face inclinée terminale 100 du tube central restent fermées par un ressort de rappel 102.

Le piston 96 parcourt ainsi la totalité de sa course. Lorsqu'il arrive en butée basse sur le fourreau 98, il exerce sur ce dernier une force tendant à l'entraîner vers le bas. Au même moment, des billes 104 immobilisant le tube central sur le fourreau viennent se placer face à des évidements d'échappement 105 et verrouillent le piston 96 sur le fourreau. L'ensemble du piston et du fourreau poursuit sa descente jusqu'à ce que la partie interne du fourreau arrive en butée sur un écrou inférieur 106 fermant le tube central. A partir de ce moment, le fourreau entraîne le tube central 95 vers le bas. La soupape s'ouvre et permet au gaz d'exercer sa pression sur la surface totale du fourreau. L'ensemble constitué par le piston et le fourreau descend alors jusqu'à extension totale du vérin.

Cette disposition présente, sur celle de la Figure 1, l'avantage d'un encombrement encore plus réduit et d'une meilleure répartition de l'effort de poussée au cours de l'éjection, la chute de pression au cours de l'éjection étant compensée par une augmentation de la surface effective d'action de la pression.

## Revendications

1. Lance-missile destiné à être monté sur un aéronef militaire, comportant des moyens permettant d'écarter le missile de l'aéronef avant allumage du propulseur de ce dernier, moyens comportant des biellettes (62, 70) articulées sur une structure support fixe et reliées par un patin (60) de façon à constituer un quadrilatère déformable, proche du parallélogramme, et des moyens à pression de fluide pour déployer les bielles dans un sens exerçant, sur le missile, une force tendant à le chasser à distance de l'aéronef, caractérisé en ce qu'il comporte des moyens désarmables d'accrochage (10, 12, 16) du missile sur la structure support, en ce que le patin (60) prend appui sur le missile et a une longueur suffisante pour fixer non seulement la distance entre le missile et l'aéronef, mais aussi l'orientation angulaire du missile et en ce que les moyens à pression de fluide sont reliés aux moyens d'accrochage pour les désarmer avant déploiement des biellettes.

2. Lance-missile selon la revendication 1, caractérisé en ce que les moyens d'accrochage du missile comportent un rail (10, 12) en une ou plusieurs pièces, sur lequel peuvent coulisser une ou des ferrures du missile de façon à engager ce dernier de l'arrière vers l'avant jusqu'à ce qu'il soit immobilisé par un crochet de verrouillage (16) longitudinal, déplaçable par un vérin (32, 34) de façon à entraîner le missile vers l'avant et à dégager les ferrures du rail.

3. Lance-missile selon la revendication 1 ou 2, caractérisé en ce que les moyens à pression de fluide comprennent un premier vérin (82) destiné à effectuer le déverrouillage et un second vérin (84) qui commande le déplacement du patin (60), les deux vérins étant associés par des moyens de transfert de fluide conçus de façon que le second vérin ne puisse être mis en action que lorsque le premier a effectué le décrochage.

4. Lance-missile selon la revendication 2, caractérisé en ce que le vérin de déverrouillage (32, 34) comprend un équipage mobile qui, dans une première partie de sa trajectoire à partir de la position de repos, provoque le décrochage du missile et, dans une seconde phase, provoque l'éjection par mise en action du patin (60).

5. Lance-missile selon la revendication 1, caractérisé en ce que le patin (60) a une longueur représentant au moins un sixième de la longueur du missile et est placé de façon à exercer son action sur le missile dans la zone du centre de gravité de ce dernier.

6. Lance-missile selon l'une quelconque des revendications précédentes, caractérisé en ce que l'une au moins des articulations est munie de moyens de réglage en position.

## Claims

1. Missile launcher for use on a military aircraft, comprising means for moving the missile away from the aircraft before the propulsion system of the latter is ignited, said means comprising links (62, 70) pivoted on a stationary support structure and connected by a bearing shoe (60) for constituting an imaginary deformable quadrilateral, having a shape close to that of a parallelogram, and fluid pressure means for moving the links into a direction exerting a thrust on the missile which tends to push it away from the aircraft, characterized in that it comprises releasable means (10, 12, 16) for locking the missile on the support structure, in that the bearing shoe (60) contacts the missile and has a sufficient length for determining not only the distance between the missile and aircraft, but also the angular position of the missile and in that the fluid pressure means are connected to the locking means for rendering them inoperative before movement of the links.

2. Missile launcher according to claim 1, characterized in that the missile locking means comprise a rail (10, 12) having one or more parts on which one or more fittings of the missile are slidably received for authorizing engagement of the missile forwardly until the missile is retained by a longitudinal latching catch (16) which is displaceable by a jack (32, 34) for driving the missile forwardly and moving the fittings clear of the rail.

3. Missile launcher according to claim 1 or 2, characterized in that the fluid pressure means comprise a first jack (82) for unlocking and a second jack (84) which controls movement of the bearing shoe (60), the two jacks being mutually associated by fluid transfer means so arranged that the second jack cannot be put in operation until the first has achieved unlocking.

4. Missile launcher according to claim 2, characterized in that the unlocking jack (32, 34) comprises a movable unit which, during a first part of travel from a rest position, causes unlocking of the missile and, during a second part, causes ejection by operation of the bearing shoe.

5. Missile launcher according to claim 1, characterized in that the bearing shoe (60) has a length of at least one sixth of the length of the missile and is so located as to exert its action on the missile in the zone of the gravity center of the latter.

6. Missile launcher according to any one of the preceding claims, characterized in that one at least of the pivotal connections is provided with position adjustment means.

## Patentansprüche

1. Flugkörperwerfer zum Aufbau auf ein militärisches Luftfahrzeug mit Mitteln zum Entfernen des Flugkörpers vom Luftfahrzeug vor Zündung des Antriebsmittels des Flugkörpers, mit Pleuel (62, 70) aufweisenden Mitteln, die auf einem festen Stützaufbau ausschwenkbar und mit einer Gleitschiene (60) zur Pildung eines veränderbaren Viereckes in Form etwa eines Parallelogrammes verbunden sind, und mit fluiden Druckmitteln zum Auseinanderbreiten der Pleuel auf eine Weise, die auf den Flugkörper eine anziehende Kraft zum Herausschleudern im Abstand vom Luftfahrzeug ausübt, dadurch gekennzeichnet, daß der Flugkörperwerfer abnehmbare Mittel zum Anhängen des Flugkörpers an den Stützaufbau aufweist, daß die Gleitschiene (60) auf dem Flugkörper und auf einer ausreichenden Länge zum Festhalten nicht nur des Abstandes zwischen dem Flugkörper und dem Luftfahrzeug sondern auch zur winkelförmigen Ausrichtung des Flugkörpers abgestützt ist, und daß die fluiden Druckmittel mit Mitteln zum Anhängen verbunden sind, um diese vor dem Auseinanderbreiten der Pleuel abzunehmen.

2. Flugkörperwerfer nach Anspruch 1, dadurch gekennzeichnet, daß die Mittel zum Anhängen des Flugkörpers eine Schiene (10, 12) aus einem oder mehreren Stücken aufweisen, auf welcher ein oder mehrere Beschläge des Flugkörpers derart gleitbar sind, daß sich des letztere hintere mit dem vorderen verbindet, bis dieser durch einen Blockierhaken (16) in Längsrichtung unbewegbar ist, wobei der Haken mittels eines Hebebockes (32, 34) derart verschiebbar ist, daß der Flugkörper gegen den vorderen mitgenommen und die Beschläge der Schiene freigegeben werden.

3. Flugkörperwerfer nach Anspruch 1 oder 2, dadurch gekennzeichnet, daß die fluiden Druckmittel einen ersten Hebebock (82) zur Entriegelung und einen zweiten Hebebock (84) aufweisen, welcher die Verschiebung der Gleitschiene (60) steuert, wobei die zwei Hebeböcke mittels Fluidübertragungsmitteln miteinander derart verbunden sind, daß der zweite Hebebock nicht verstellbar ist, während der erste Hebebock die Aushakung bewirkt.

4. Flugkörperwerfer nach Anspruch 2, dadurch gekennzeichnet, daß der Hebebock zur Entriegelung (32, 34) ein bewegliches Gerät aufweist, welches in einem ersten Teil seiner Bewegungsbahn aus einer Ruheposition startet und das Aushaken des Flugkörpers bewirkt und in einer zweiten Phase das Herauswerfen mittels Startens der Gleitschiene (60) bewirkt.

5. Flugkörperwerfer nach Anspruch 1, dadurch gekennzeichnet, daß die Gleitschiene (60) eine Länge aufweist, welche wenigstens ein Sechstel der Länge des Flugkörpers darstellt, und daß sie derart angeordnet ist, daß sie ihre Wirkung auf den Flugkörper in der Schwerpunktszone des letzteren entfaltet.

6. Flugkörperwerfer nach Anspruch 1 oder einem der folgenden, dadurch gekennzeichnet, daß wenigstens eines der Gelenke mit einer Einstelleinrichtung versehen ist.

FIG.1A.

FIG.2.

FIG.3.

FIG 11

FIG.4.

0 192 579

F I G. 5.

FIG. 6.